(19) Europäisches Patentamt

European Patent Office

Office européen des brevets

(11) Publication number: **0 459 517 A1**

## EUROPEAN PATENT APPLICATION

(21) Application number: 91108966.2

(22) Date of filing: 31.05.91

(51) Int. Cl.5: **G11B 7/13**, G11B 7/09

(30) Priority: 31.05.90 KR 797490

(43) Date of publication of application:
04.12.91 Bulletin 91/49

(84) Designated Contracting States:
DE FR GB IT NL

(71) Applicant: SAMSUNG ELECTRONICS CO. LTD.
416 Maetan-Dong, Kwonsun-ku
Suwon, Kyunggi-do(KR)

(72) Inventor: Lee, Chul-woo
32-902, Hyundae Apt.,301-162,
Dongbuicheon-dong
Yongsan-ku, Seoul(KR)
Inventor: Jung, Sung-tae
203-102, Hyundae yeonyein Apt., 685-70 Kuro
1-dong
Kuro-ku, Seoul(KR)
Inventor: Park, Soo-han
41-306, Jugong Apt., 897 Maetan-dong
Kwonseon-ku, Suwon, Kyunggi-do(KR)
Inventor: Cho, Kun-ho
7-405, Kangnam Apt., 5-ga 11-1
Dangsan-dong
Yeongdeungpo-ku, Seoul(KR)
Inventor: Yoo, Ick-hyoung
7-1402, Samsung 1-cha Apt., 81-3,
Maetan-dong
Kwonseon-ku, Suwon, Kyunggi-do(KR)

(74) Representative: WILHELMS, KILIAN &
PARTNER Patentanwälte
Eduard-Schmid-Strasse 2
W-8000 München 90(DE)

(54) Focussing-error detecting apparatus for optical disk drive.

(57) A focusing-error detecting apparatus for detecting a focal offset according to the vibration of a disk 1 during optical read-out and write-in of information, and then generating a focusing servo signal, which need not precisely adjust the edge portion 6a to the back focus of an objective lens 2 by using an edge plate 6 having a predetermined thickness and thereby allowing a partial passing of a reflected beam 3' and 4'. The apparatus is facilitated in assembly and reduced in poor production rate. In the apparatus, the variance of the amount of light near the correct focus point is small.

## Background of the Invention

The present invention relates to an apparatus for detecting focusing-errors in an optical disk drive, and particularly to a focusing-error detecting apparatus for sensing a focal offset due to the vibration of the disk during optical read-out and write-in of information, and then generating a focusing servo signal.

The operation of playback and recording in an optical disk drive is carried out by revolving the disk at a constant velocity and then scanning a light spot from a optical pick-up onto the revolving disk. At this time the light spot must be accurately focused on the surface of the disk. In fact, however, irregular vibration of the disk during the revolution causes the light spot to be out of focus with respect to the disk surface. Thus, it is necessary to drive vertically the entire optical pick-up or at least a part of its optical system according to the vertical displacement of the disk, and to do that it is also necessary to simultaneously focusing-error detect a focal offset of the light spot on the disk during playback and recording.

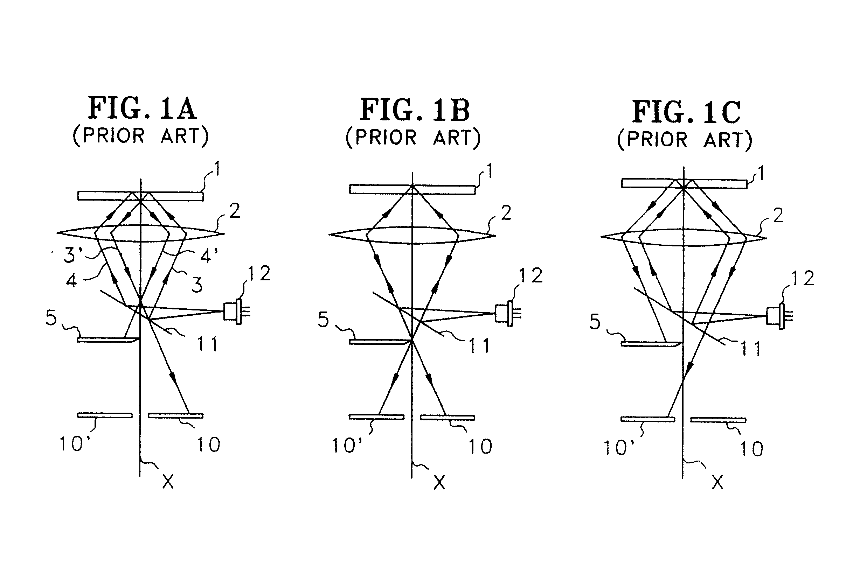

For the detection of a focusing-error, an apparatus employing a knife edge 5 and a two-separated photodetector 10 and 10' as shown in Fig.1 has been used. This is constructed in such a fashion that incident light beams 3 and 4 emitted from light source 12 and deflected at half mirror 11 converge on disk 1 by means of objective lens 2, reflected light beams 3' and 4' which are reflected on the disk 1 and pass through the objective lens 2 and half mirror 11 are phase-inverted at the end of knife edge 5 positioned at the back focal length of the objective lens 2, and the phase-inverted reflected light beams reach the two-separated photodetector 10 and 10'. As shown in Figs.1A and 1C, when disk 1 is closer to objective lens 2 or further away from it, a part of the reflected light beams 3' and 4' are intercepted by knife edge 5 and the remainder is detected at only one section of two-separated photodetector 10 and 10'.

Such an apparatus employing the knife edge and two-separated light detector requires highly precision assembling so that the end of the knife edge must be positioned exactly at the back focus. But this is very difficult to achieve thus there is a high rate of poor production due to its minute assembling tolerance. Additionally, the apparatus is also vibrated by generating a high frequency signal as the amount of light detected on the photodetector around the correct focus is sharply varied.

Besides the above apparatus, there are appratuses employing a cylindrical lens (see USP 4,079,247) and one with a prism (see USP 4,612,437) which share the above problems.

## Summary of the Invention

Therefore, it is the object of the present invention to provide a focusing-error detector which does not require a high precision assembling process and does not sharply change the amount of light detected on the photodetector. This object can be achieved in such a manner that a part of the reflected light beams intercepted by a focal offset in the prior art pass through to reach another section in a two-separated detector.

According to the present invention, there is provided a focus-error detecting apparatus for detecting focusing-errors of an optical disk drive by selectively intercepting or reflecting a part of a reflected light beam between an objective lens which focuses incident beam entering to a disk and focuses the reflected light beam reflected from the disk at the back focus, and a two-separated photodetector which receives the reflected light beam. The apparatus comprises an edge plate having a predetermined thickness in the direction of the light axis of the objective lens, the end of the edge plate being off a little from the light axis near the back focus of the objective lens in order that a part of the reflected light beam selectively intercepted or reflected partially passes through.

According to the present invention, it is sufficient that the edge plate is positioned in proximity to the back focal length of the objective lens, which does not require a high precision assembling. Further, the entire amount of light reaching the two-separated photodetector is abundant and a sudden variation in the difference of the amount of light detected in two sections around the correct focus point does not occur.

## Brief Description of the Drawings

The above object and other advantages of the present invention will become apparent by describing in detail a preferred embodiment of the present invention with reference to the attached drawings in which:

Figs.1A, 1B and 1C illustrate the detection of focal-error/offset according to the distance between a disk and an objective lens in the conventional apparatus using a knife edge, Fig.1A showing the disk closer to the lens, Fig.1B showing correct focus, Fig.1C showing the disk further away from the lens, respectively;

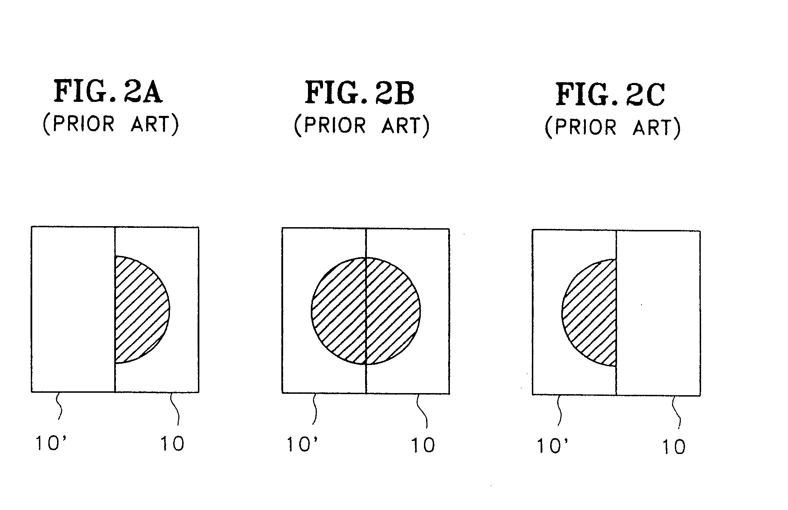

Figs.2A, 2B and 2C illustrate the amount of light detected at the photodetector according to the respective states shown in Figs.1A, 1B and 1C;

Figs.3A, 3B and 3C illustrate the detection of focal-error/offset according to the distance between the disk and the objective lens in the present invention, Fig.3A showing the disk closer to the lens, Fig.3B showing the correct focus, Fig.3C showing the disk further away from the lens, respectively;

Figs.4A, 4B, and 4C illustrate the amount of light detected on the photodetector according to the respective states shown in Figs.3A, 3B and 3C;

Figs.5A and 5B show other embodiments of the edge plates of the present invention;

Figs.6A and 6B illustrate schematically the paths of the reflected beams by the edge plates shown in Figs.5A and 5B, each being correctly-focused.

Description of the Invention

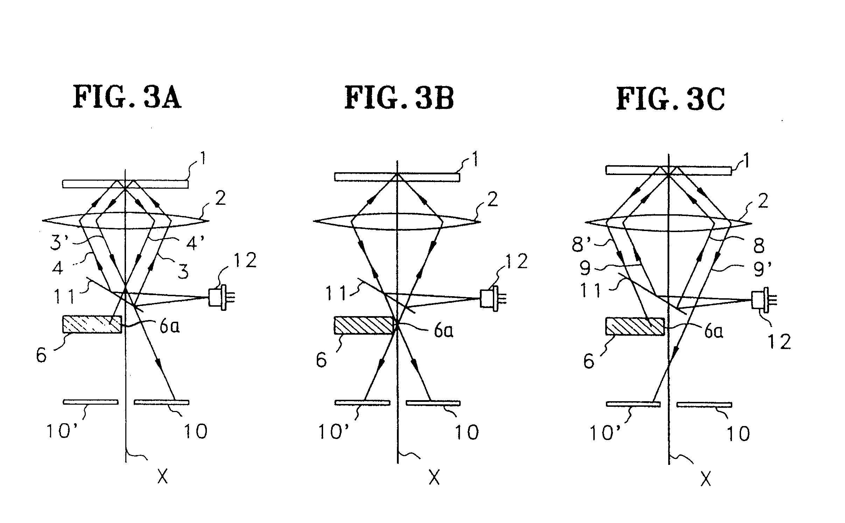

Referring to Fig.3A, incident light beams 3 and 4 which were generated from light source 12 and passed through half mirror 11 converge on disk 1 via the objective lens 2. Reflected light beams 3' and 4' which were reflected on the disk 1 and transmitted through objective lens 2 and half mirror 11 converge at the back focus of the objective lens 2, and reach the two-separated photodetector 10 and 10' in a phase-inverted condition. Edge plate 6 is located in proximity to the back focus of the objective lens 2. The edge plate 6 includes an edge portion 6a which is formed by the predetermined thickness t with light absorption or reflection material for intercepting light in the direction of light axis X, the edge portion 6a being slightly offset from the light axis X and positioned around the back focus of the objective lens 2.

The edge plate 6 is to intercept one of reflected beams 3' and 4' according to the variation of distance between disk 1 and objective lens 2 like the conventional knife edge 5, but the edge plate of the present invention is different from the knife edge in that the edge plate partially passes the reflected light beam 3' or 4'.

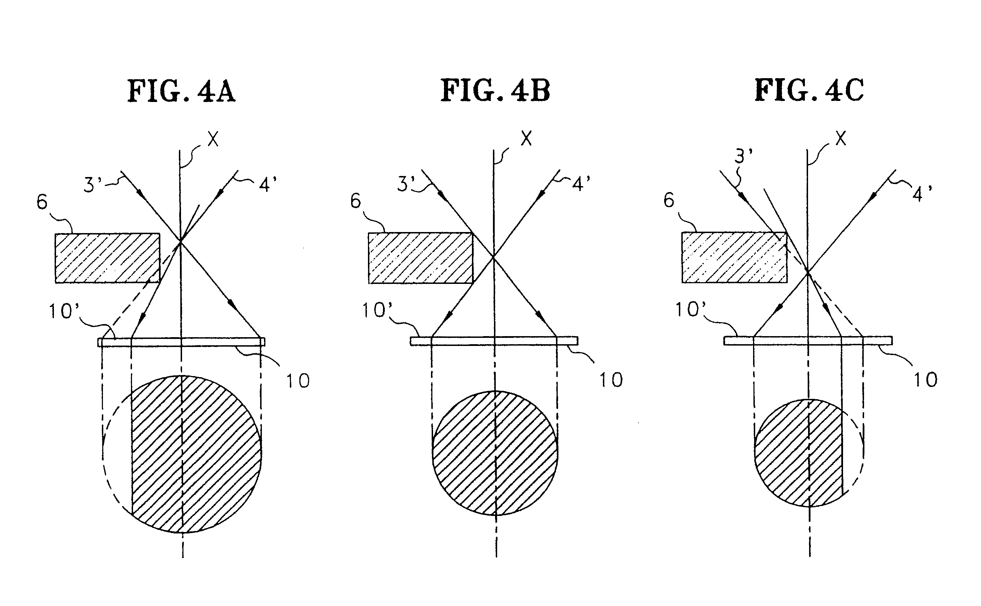

That is, in Figs.3A and 3C when disk 1 is closer to lens 2 or disk is further away from lens 2, one beam of the reflected light beams 3' and 4' passes without interception and the other beam partially passes through the edge plate so that two beams reach photodetector 10 and 10' in the form of a partially severed circle as shown in Figs.4A and 4C. Thus, the two sections of photodetector 10 and 10', except when in the correct focus condition, have difference of the amount of light. Therefore, desired focusing servo control can be achieved by using the differential signal of the photodetector 10 and 10'.

In addition, compared to the prior art, the entire amount of light reaching photodetector 10 and 10' is abundant, and sudden variation of the differential signal does not occur. Owing to this, a stable focusing servo action can be possible.

Particularly, since the edge plate 6 is allowed to have reflected light beam 3' or 4' partially pass, it may be located not exactly at but in proximity to the back focus of the objective lens 2.

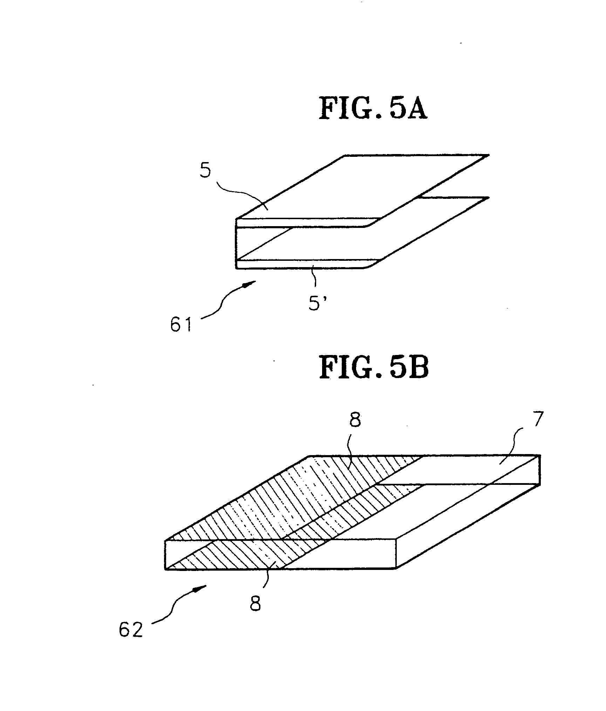

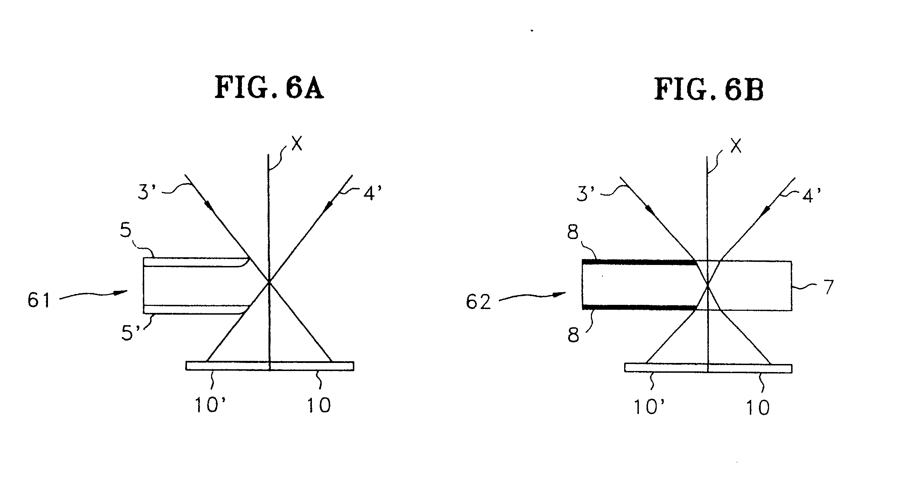

Figs.5A and 5B illustrate other embodiments of the edge plate. The edge plate 61 shown in Fig.5A is formed by overlapping two knife edges 5 and 5' by a predetermined distance, which may be used in such a manner as shown in Fig.6A. The edge plate 62 shown in Fig.5B is made of a transparent paired glass or a single glass 7 whose front surface and rear surface are coated with light absorption or reflection films 8 for intercepting light. In the edge plate 62, reflected beams 3' and 4' are deflected by passing through glass 7 as shown in Fig.6B, but the result is similar to those of the above two embodiments as shown in FIGs.4A to 4C.

As described above, the focusing error detecting apparatus according to the present invention need not precisely adjust the edge portion to the back focus of the objective lens by using an edge plate having a predetermined thickness and allowing a partial transmission of a reflected beam, thereby facilitating the assembly of the apparatus and reducing poor production rate. Further, the apparatus displays a stable linear control characteristic since a difference of the amount of light near the correct focus is small.

While the invention has been particularly shown and described with reference to preferred embodiments thereof, it will be understood by those skilled in the art that various changes in form and details may be made therein without departing from the spirit and scope of the invention as defined by the appended claims.

**Claims**

1. A focusing-error detecting apparatus for optical disk drive 1 used for detecting focusing-errors of an optical disk drive by selectively intercepting or reflecting a part of a reflected light beam 3' and 4' between an objective lens 2 which focuses incident beam entering to the disk and focuses the reflected light beam 3' and 4' reflected from the disk 1 at the back focus, and a two-separated photodetector 10 and 10' which receives the reflected light beam 3' and 4' said apparatus comprising:

   an edge plate 6 having a predetermined thickness in the direction of light axis X of the objective lens, the end of said edge plate 6 being off a little from said light axis X near the back focus of the objective lens 2, whereby a part of said reflected light beam 3' and 4' selectively intercepted or reflected is partially transmitted.

2. A focusing-error detecting apparatus for detecting focusing-errors of an optical disk drive 1 as claimed in claim 1, wherein said edge plate 6 is provided by overlapping two knife edges.

3. A focusing-error detecting apparatus for detecting focusing-errors for an optical disk drive 1 as claimed in claim 1, wherein said edge plate 6 is formed by coating the front and rear surfaces of a glass with an light absorption or reflection film 8.

FIG. 1A
(PRIOR ART)

FIG. 1B
(PRIOR ART)

FIG. 1C
(PRIOR ART)

EP 0 459 517 A1

# FIG. 2A
(PRIOR ART)

# FIG. 2B
(PRIOR ART)

# FIG. 2C
(PRIOR ART)

10'    10

10'    10

10'    10

FIG. 3A    FIG. 3B    FIG. 3C

EP 0 459 517 A1

## FIG. 4A

## FIG. 4B

## FIG. 4C

EP 0 459 517 A1

# FIG. 5A

5

5'

61

# FIG. 5B

8

7

8

62

# FIG. 6A

# FIG. 6B

## DOCUMENTS CONSIDERED TO BE RELEVANT

EP 91108966.2

| Category | Citation of document with indication, where appropriate, of relevant passages | Relevant to claim | CLASSIFICATION OF THE APPLICATION (Int. Cl.5) |
|---|---|---|---|
| X | EP - A1 - 0 171 816 (HITACHI) * Fig. 1,3; abstract * | 1 | G 11 B 7/13 G 11 B 7/09 |
| A | PATENT ABSTRACTS OF JAPAN, unexamined applications, P field, vol. 12, No. 422, November 9, 1988 THE PATENT OFFICE JAPANESE GOVERNMENT page 148 P 783 * Kokai-No. 63-157 326 (MATSUSHITA ELECTRIC IND CO LTD) * | 1 | |

TECHNICAL FIELDS SEARCHED (Int. Cl.5)

G 11 B 7/00
G 02 B 27/00
G 02 B 7/00

The present search report has been drawn up for all claims

| Place of search | Date of completion of the search | Examiner |
|---|---|---|
| VIENNA | 03-09-1991 | BERGER |